# DEMANDE DE BREVET EUROPEEN

(11) **EP 1 235 201 A2**
(43) Date de publication de la demande: **28.08.2002**
(21) Numéro de dépôt: 02075638.3
(22) Date de dépôt: 18.02.2002
(51) Int. Cl.: G09G 5/24

(54) **Procédé de contrôle d'affichage d'un caractère basé sur une génération de code dynamique**

(30) Priorité: 27.02.2001 FR 0102663
(71) Demandeur: Koninklijke Philips Electronics N.V., 5621 BA Eindhoven (NL)
(72) Inventeur: Gorokhovik, Dimitri, 75008 Paris (FR)
(74) Mandataire: Chaffraix, Jean

(57) **Abrégé**

L'invention concerne un procédé destiné à contrôler l'affichage d'au moins un caractère sur un appareil de sortie (DIS), une description sommaire (DES) dudit caractère étant incluse dans une base de données (DB), ledit procédé comprend une étape d'extraction (RAS), à partir de la description sommaire dudit caractère (DES), d'un code symbolique (SYM) non exécutable définissant des actions pour colorier des points sur l'appareil de sortie (DIS), une étape de génération dynamique (DYN), à partir dudit code symbolique (SYM), d'un code exécutable (BIN), une étape d'exécution (EXE) du code exécutable correspondant audit caractère afin d'afficher le caractère sur l'appareil de sortie (DIS). Avantageusement, le procédé selon l'invention comprend une étape de stockage dans un module de stockage (STO) du code exécutable généré.

Application : Appareil électronique requérant un affichage en fonction annexe.

## Description

L'invention concerne un procédé destiné à contrôler l'affichage d'au moins un caractère sur un appareil de sortie, une description sommaire dudit caractère étant incluse dans une base de données, ledit procédé comprenant les étapes suivantes :
- élaboration d'un code exécutable à partir de la description sommaire dudit caractère,
- exécution du code exécutable correspondant audit caractère afin d'afficher le caractère sur l'appareil de sortie.

Un tel procédé est connu du document US 6,005,588. Dans ce document, au moins un ensemble de caractères, constitué en général d'un alphabet et d'un certain nombre de sigles d'une taille et d'une police particulière, est présent à l'intérieur d'une base de données. Dans cette base de données, les caractères sont codés selon un langage de définition du caractère, tel que, par exemple, TrueType ou PostScript, définissant ainsi une description sommaire des caractères. Les étapes d'élaboration de code exécutable telle que proposée dans le document US 6,005,588 génèrent, en premier lieu, un plan de pixels (bitmaps en anglais) pour chaque caractère d'un ensemble de caractères. Ce plan de pixels est ensuite utilisé par un générateur de code (une routine) qui crée du code exécutable en lisant le plan de pixels ligne par ligne.

La possibilité de générer localement le code exécutable à partir d'une description sommaire des caractères permet une grande portabilité des polices. Par exemple, la description sommaire des caractères dans une certaine police et pour une certaine taille requise pour l'affichage d'une page Web peut être envoyée sur Internet en même temps que cette page. La reconstruction des textes se fait localement par génération de code.

L'invention est liée aux considérations suivantes :

Dans le document US 6,005,588, la génération du code se fait grâce à une routine qui lit les plans de pixels, ladite routine étant la même quel que soit le plan de pixels lu. Par conséquent, comme cette routine travaille sur des plans de pixels, elle lit obligatoirement toutes les lignes du plan de pixels. Le code obtenu est compilé à l'avance. Dans les modes de réalisation préférés du document US 6,005,588, cette compilation est complétée au cours d'étapes de simplification du code. Le code généré est essentiellement composé d'appels de fonctions (« DrawPixel » ; « DrawLine »). En effet, la génération à partir de plans de pixels ne permettant pas une optimisation plus poussée du code généré, à l'exécution, l'appel des fonctions engendre une certaine perte de temps.

Un but de l'invention est de permettre la création simplifiée d'un code en restant à un haut niveau d'abstraction, le code exécutable obtenu ayant une exécution très rapide.

En effet, un procédé destiné à contrôler l'affichage d'au moins un caractère sur un appareil de sortie, conforme au paragraphe introductif est remarquable selon l'invention en ce que l'étape d'élaboration du code exécutable comprend deux sous-étapes :
- une étape d'extraction, à partir de la description sommaire dudit caractère, d'un code symbolique non exécutable définissant des actions pour colorier des points sur l'appareil de sortie,
- une étape de génération dynamique, à partir dudit code symbolique, du code exécutable.

Le code symbolique est nécessaire à la mise en oeuvre de la génération dynamique. Cependant ces deux étapes peuvent être plus ou moins dissociées. Le matériel actuellement disponible permet de faire de la génération dynamique de code avec une bonne fiabilité et une bonne rapidité. Cette fiabilité et cette rapidité sont améliorées régulièrement par évolution des techniques. La durée requise à la génération dynamique de code peut être plus importante que, par exemple, la génération d'un plan de pixels à partir des mêmes données mais dans tous les cas, la rapidité d'exécution du code généré de manière dynamique compense ce handicap quand le caractère est répété.

Dans un mode de réalisation avantageux, le procédé est tel que le code exécutable élaboré est stocké dans un module de stockage. Lorsque l'affichage d'un caractère est requis, il suffit alors d'appeler l'exécution du code exécutable déjà généré et stocké dans la mémoire : le temps correspondant à des élaborations successives du code exécutable est alors économisé.

Le document US 6,005,588 propose ainsi de stocker le code exécutable. Cependant, le document US 6,005,588 propose d'élaborer, dans une étape préalable, un code exécutable pour la totalité d'un ensemble de caractères dans toutes les polices qui seront utilisées, lesdites polices étant par conséquent connues à l'avance. Le document cité propose ensuite de stocker ce code, puis d'utiliser au besoin les codes correspondant aux caractères requis pour l'affichage. Cela implique l'élaboration de code exécutable pour des caractères inutilisés et par conséquent de la perte de temps.

Dans un mode de réalisation préféré de l'invention, le procédé selon l'invention comprend les étapes suivantes :
- réception d'une requête d'affichage dudit caractère,
- recherche d'un code exécutable correspondant audit caractère dans le module de stockage,
- décision, selon le résultat de la recherche, de :
   - lorsque le code exécutable correspondant audit caractère est absent dans le module de stockage, élaborer ce code à partir de la description sommaire dudit caractère, le stocker dans le module de stockage et l'exécuter afin d'afficher ledit caractère sur l'appareil de sortie,
   - lorsque le code exécutable correspondant audit caractère est présent dans le module de stockage, l'exécuter afin d'afficher ledit caractère sur l'appareil de sortie.

En effet, la génération dynamique de code selon l'invention peut être aisément effectuée simultanément à l'exécution de l'affichage, c'est-à-dire en temps réel et non pas dans une étape préalable. Les caractéristiques d'une élaboration de code exécutable selon l'invention permettent ainsi que le code exécutable correspondant audit caractère, soit généré lorsque le code exécutable correspondant audit caractère est absent dans l'appareil de stockage.

Avantageusement, l'appareil de stockage est une mémoire cache permettant une gestion dynamique du stockage des codes générés. Ce mode de réalisation préféré permet de tirer le parti maximum, en durée de traitement de l'affichage, de l'élaboration de code selon l'invention : d'une part, l'étape d'élaboration étant assez longue, le code n'est généré qu'au besoin et d'autre part, le code déjà généré, très rapide à l'exécution, est rappelé directement pour être exécuté.

Une application de l'invention concerne un produit programme d'ordinateur contenant du code pour réaliser les étapes du procédé selon l'invention. L'invention peut être implémentée dans tout dispositif destiné à afficher au moins un caractère sur un appareil de sortie.

Dans une de ses applications, l'invention peut être avantageusement mise en oeuvre dans tout appareil électronique nécessitant un affichage de caractères pouvant être de diverses tailles et de diverses polices sur un appareil de sortie : téléphone, portable ou non, appareil électronique en liaison avec un réseau, par exemple Internet : ordinateur, fax, imprimantes... L'invention est particulièrement intéressante pour les appareils contenant un ou plusieurs processeurs sans support matériel dédié à la manipulation de plans de pixels.

L'invention sera mieux comprise à la lumière de la description suivante de quelques modes de réalisation, faite à titre d'exemple et en regard des dessins annexés, dans lesquels :
- la figure 1 est un schéma fonctionnel représentant les différentes étapes d'un procédé destiné à afficher au moins un caractère sur un appareil de sortie, selon l'invention.
- la figure 2a illustre la représentation symbolique attachée à l'affichage de la lettre I représentée sur la figure 2b.
- la figure 3 est un diagramme schématique d'un appareil électronique selon l'invention.

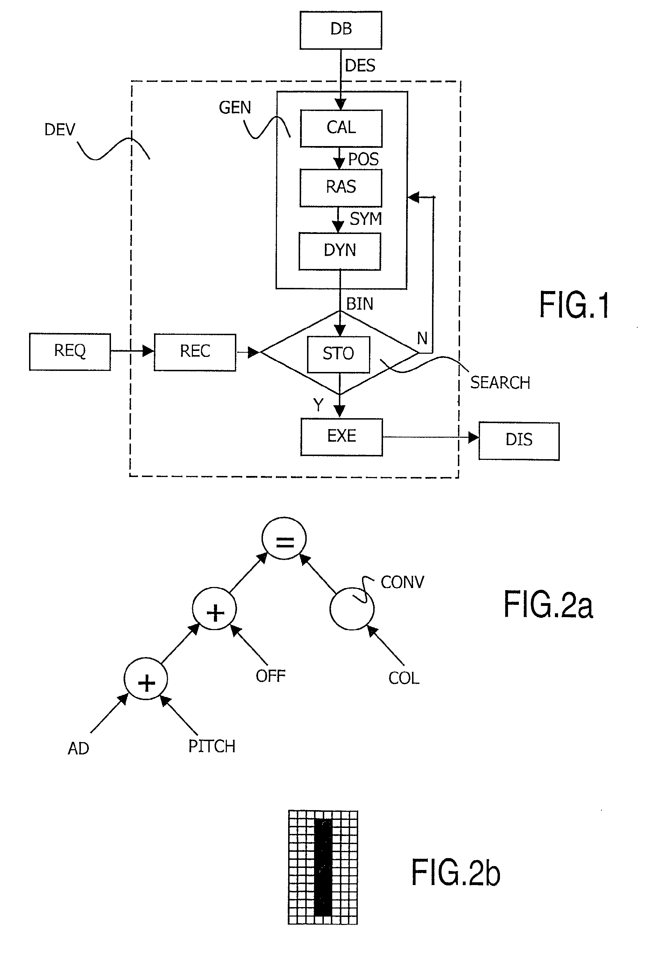

La figure 1 est un schéma fonctionnel représentant les différentes étapes d'un procédé destiné à contrôler l'affichage d'au moins un caractère sur un appareil de sortie DIS. La figure 1 représente un mode de réalisation préféré de l'invention. Dans ce mode de réalisation préféré, le procédé selon l'invention comprend une étape de réception réalisée au sein de moyens de réception REC d'une requête REQ d'affichage dudit caractère. Une étape de recherche SEARCH d'un code exécutable, correspondant audit caractère, est alors effectuée dans un module de stockage STO. Lorsqu'un code exécutable correspondant audit caractère est trouvé dans STO (cas « Y »), l'adresse dudit code est envoyée vers un module d'exécution EXE où ledit code est exécuté afin d'afficher ledit caractère sur l'appareil de sortie DIS externe à un dispositif DEV mettant en oeuvre le procédé selon l'invention décrit ci-dessus. Lorsque aucun code exécutable correspondant au caractère n'est trouvé dans le module de stockage STO (cas « N »), une étape d'élaboration GEN de code exécutable BIN est activée. Le module de stockage STO présente ainsi le fonctionnement d'une mémoire cache qui peut, dans une mise en oeuvre avantageuse, être une partie d'une mémoire RAM dédiée complètement au stockage de ce type de données graphiques. Le procédé selon l'invention présente en effet l'avantage de produire du code à stocker, ledit code pouvant être stocké dans des mémoires classiques et peu coûteuses, ce qui n'est pas le cas des plans de pixels pour lesquels une mémoire graphique, coûteuse, est généralement requise. Le fonctionnement en mémoire cache décrit ici est spécifique du mode de réalisation préféré de l'invention et permet de tirer le parti maximum, en durée de traitement de l'affichage, de l'élaboration de code selon l'invention : d'une part, l'étape d'élaboration étant assez longue, le code n'est généré qu'au besoin et d'autre part, le code déjà généré, très rapide à l'exécution, est rappelé directement pour être exécuté. Ce mode de réalisation n'exclut cependant pas d'autres mises en oeuvre de stockage.

Le fait de générer et de stocker du code au lieu de plans de pixels permet un affichage plus rapide par lecture directe du code exécutable stocké au lieu des procédures classique d'affichage de caractères consistant à appeler, pour chaque caractère, le plan de pixels correspondant stocké et de le faire lire, pour afficher le caractère, par une routine (exécution d'un code binaire) commune à tous les plans de pixels, ladite routine créant le code exécutable. Ainsi, l'intérêt de stocker du code exécutable existe principalement, aujourd'hui, sur des appareils pour lesquels l'implantation d'un système dédié à la manipulation de données graphiques (plans de pixels...), tel que par exemple, une puce graphique dédiée, est déconseillée pour des raisons de coût, d'efficacité, de consommation d'énergie ou d'autres contraintes.

L'étape d'élaboration GEN de code exécutable BIN est en relation avec une base de données DB incluant au moins une description sommaire DES dudit caractère. La description sommaire DES peut être de niveau très bas, par exemple une description en nombres réels de courbes permettant de décrire les caractères (courbes de Bésier pour les lettres par exemple), ou d'un niveau plus élevé par exemple PostScript ou TrueType, représentant en général des courbes en langage propre à ces formats. Ces descriptions sommaires DES donnent un dessin du caractère. Le but de l'invention est de fournir une structure d'interprétation de ces dessins.

Dans les systèmes classiques utilisant des plans de pixels, un système de coordonnées est attaché à un plan de pixels vide de taille maximale pour la police et la taille spécifiée. Par exemple, l'origine du système de coordonnées est le coin supérieur gauche. Cette configuration est courante mais toute autre solution est possible (coin inférieur gauche...). Dans ce système de coordonnées, les points décrits dans la description sommaire (par exemple, les points de Bésier) sont placés pour le caractère de la taille et de la police requise. Les courbes correspondantes sont ensuite tracées en se basant sur les points positionnés. L'intérieur des contours formés par ces courbes est noirci en noircissant chaque pixel du plan de pixels qui se trouve à l'intérieur de ce contour. Le processus de passage de l'espace de coordonnées à l'espace de pixels s'appelle « rastérisation ». Ce système nécessite le traitement ultérieur des plans de pixels. Dans l'état de la technique, ce traitement est réalisé par une routine qui lit la totalité des lignes du plan de pixels. La lecture de la totalité des lignes du plan de pixels demande du temps. Cette approche n'est pas bien adaptée aux appareils ne comprenant pas de système dédié à la manipulation de plans de pixels particulièrement intéressés par l'invention. De plus, le code obtenu n'est pas optimal car il comprend des appels fonctionnels qui nuisent à la rapidité d'exécution dudit code. L'invention propose une approche différente. Cette approche comprend une étape semblable à la première étape de l'approche classique : une étape de calcul CAL des positions POS des points et des courbes définissant les caractères dans un système de coordonnées semblable à celui décrit auparavant, à partir de la description sommaire DES. Chaque ligne est ensuite passée en système de pixels dans une étape de « rastérisation » RAS dans ce système de coordonnées mais au lieu de produire des points noirs, cette étape extrait, à partir des positions POS, du code symbolique SYM qu'il serait nécessaire d'exécuter pour justement colorier des points, cette étape définit, en fait, des actions pour « colorier » des octets codant pour des points sur l'appareil de sortie. Le code symbolique n'est, cependant, pas un code directement exécutable. Une étape de génération DYN génère ensuite du code dynamiquement à partir du code SYM, exclusivement dédié à cette tache. Le générateur DYN du code exécutable impose le format exact de la forme symbolique. Les deux étapes RAS et DYN peuvent être dissociées ou entremêlée s. Lesdites deux étapes peuvent ainsi être indivisibles : extraction du code symbolique pour une ligne de pixels - génération du code exécutable correspondant - extraction du code symbolique pour la ligne suivante --etc... Cette façon de faire peut être particulièrement avantageuse lorsqu'il n'y a pas assez de mémoire disponible pour stocker provisoirement la forme symbolique SYM. Tout dépend du générateur DYN utilisé et du mode de réalisation choisi. Le code exécutable ainsi obtenu ne contient pas d'appels fonctionnels mais est constitué d'octets « coloriés ». Par la nature même de la génération dynamique, le corps d'une routine « drawPixel » telle que présentée dans l'état de la technique est en effet automatiquement « inséré » dans le code autant de fois que nécessaire. Vu que tout appel fonctionnel est supprimé du code généré selon l'invention, il est hors de propos d'envisager une simplification des lignes telle qu'exposée dans le document de l'état de la technique par appel d'une fonction « DrawLine » au lieu de dix appels à une fonction « DrawPixel ». Des étapes coûteuses en temps et en ressources de calcul sont ainsi supprimées du procédé de contrôle d'affichage selon l'invention. Le caractère « sur mesure » de l'élaboration du code exécutable selon l'invention s'oppose, en effet, à l'élaboration de ce code par lecture d'un plan de pixels par une routine semblable pour tous les pixels. L'élaboration selon l'invention permet de rester à un haut niveau d'abstraction et, dans certaines configurations, de gagner en temps de calcul. Elle est permise par l'évolution des techniques en matière de génération dynamique de code. Le code exécutable élaboré est d'exécution très rapide. Une fois généré, le code exécutable est exécuté dans une étape EXE afin d'afficher le caractère sur l'appareil de sortie. Un avantage supplémentaire de l'élaboration de code exécutable selon l'invention est de pouvoir être aisément effectuée simultanément à l'exécution de l'affichage, c'est-à-dire en temps réel. Cela permet d'envisager le mode de réalisation préféré présenté plus avant, où l'élaboration de code est faite au besoin.

Dans une mise en oeuvre avantageuse, une sorte de table incluse dans l'appareil de stockage STO présente, d'une part, les paramètres figés lors de l'élaboration des codes exécutables et, d'autre part, en correspondance, l'adresse des codes exécutables correspondant à ces paramètres. Cette table est lue lors de l'étape de recherche SEARCH du code exécutable correspondant au caractère devant être affiché. Par appel de son adresse, le code exécutable BIN est, par exemple, directement reproduit dans la chaîne d'instructions d'affichage. La routine générée peut ainsi utiliser des instructions de remplissage de blocs de mémoire, disponibles sur certains CPUs, elle peut également utiliser le contrôleur DMA dans le même but (DMA unit en anglais : Direct Memory Access). Ceci n'était pas envisageable dans le cas du code généré dans le document US 6,005,588 à cause de la structure même de ce code.

Un exemple de la forme symbolique SYM est schématisé sur la figure 2a. Cette figure n'est qu'indicative d'un mode spécial de réalisation. Le code symbolique a, dans cet exemple, une structure appelée en « arborescence ». Sur cette figure, la structure d'un code symbolique SYM destiné à tracer un « I » majuscule dans la police « sans serif » telle que Arial dans un cadre d'une taille 14x8 avec la couleur COL est représentée. Pour dessiner cette lettre il faut noircir les colonnes 3 et 4 en comptant de 0 dans les lignes 1 à 12 en comptant de 0, ainsi que représenté sur la figure 2b.
Ce code symbolique reçoit les arguments suivants :
- l'adresse AD du point origine (0 ;0) (coin gauche supérieur de la lettre) ;
- la couleur COL de tracé de la lettre ;
- la taille PITCH de la ligne de la scène graphique où la lettre doit être dessinée, en nombre d'octets ;

Les paramètres suivants sont, par essence, fixés dans le code symbolique :
- type de la police (Arial) ;
- taille de la police (14) ;
- casse de la lettre (majuscule) ;
- style de la police (normal) ;
- nombre de bits par pixel (8, c'est-à-dire un octet par pixel, en général).

Sur la figure 2a est ainsi représenté le code symbolique pour colorier le point (1 ;3) faisant partie de la lettre I majuscule en police Arial à la taille désirée. Ce code symbolique en arborescence fait partie d'une routine définie à partir des variables et des paramètres fixés : routine_I_majuscule_arial_14_normal(AD, COL, PITCH).

L'adresse de départ AD est une entrée de l'arbre ainsi que la couleur COL et la taille PITCH de la ligne graphique. Pour colorier le point (1 ;3), il faut d'abord « sauter » une ligne (PITCH à partir de AD) puis faire un offset OFF de 3 points pour parvenir au point (1 ;3) puis colorier l'octet correspondant avec la couleur COL.

Les points restants sont coloriés de la même façon : l'expression se répète avec les autres valeurs d'adresses correspondant aux points à colorier. Cependant l'adresse n'a besoin d'être calculée de façon complète qu'une fois, pour ensuite être incrémentée de 1 en passant à un autre point de la même ligne, et de PITCH en passant à la ligne suivante. Dans la mise en oeuvre particulière représentée sur la figure 2, la couleur COL est convertie sur 8 bits dans une étape CONV. En effet, l'interface des routines doit être le même quelle que soit la résolution de la scène graphique : 4, 8 ou 16 bits. Ainsi, la couleur passée est définie sur 32 bits, chaque routine prenant la partie qui lui est propre. Par conséquent, toutes ces optimisations s'effectuent à l'extraction du code symbolique et à la génération du code exécutable, et non à l'exécution de ce dernier. Le code symbolique peut être représenté en mémoire en tant qu'un jeu de structures arborescentes comme décrit plus haut ou encore comme une séquence de codes pour une machine à pile, c'est-à-dire par une séquence « bytecodes » stockée dans un tableau d'octets :
Load address
Load pitch
Add
Load 3
Add
Load color
Storebyte
Une autre possibilité est de représenter ce code dans un tableau en mémoire par des triplets du format « t1<- operation (t2,t3) » :
Add %r1, address, pitch
Add %r1, %r1, 3
MoveByte [%r1], color

Les méthodes de représentation interne du code exécutable en mémoire sont bien connues du domaine de la compilation de langages de programmation où elles servent aussi pour effectuer des optimisations sur un code. Elle est très souvent appelée « la représentation interne » du code. « Compilers : Principles, Techniques and Tools » de Aho A. V., Sethi R., et Ullman J. D. (Addison Wesley, Reading, MA, 1986, ISBN 0201100886) est un exemple de référence pour la description des formes symboliques. Le code symbolique peut éventuellement être stocké. Cela est, par exemple, avantageux si le temps de sa génération à partir de PostScript est long et que sa taille est négligeable par rapport à la taille de son code exécutable. Dans ce cas, si la décision est prise de supprimer du cache le code exécutable généré correspondant à un caractère, le code symbolique mémorisé sera utilisé, à la prochaine requête d'affichage du caractère, pour la génération du code exécutable au lieu de retraiter le PostScript à nouveau. Cependant, si la taille du code symbolique est comparable à celle du code exécutable, mieux vaut ne jamais supprimer du cache le code exécutable généré correspondant à un caractère, plutôt que de stocker les deux en dupliquant ainsi la mémoire requise. Le choix du format du code symbolique est imposé par le générateur DYN de code exécutable qu'on utilisera pour produire du code exécutable BIN à partir du code symbolique SYM. Des générateurs dynamiques de code binaire exécutable sont connus de l'état de la technique, par exemple, dans le document : « Finite-State Code Generation » de C. W. Fraser et T. A. Proebsting dans 'Microsoft Research, One Microsoft Way', Redmond, WA 98052 et « VCODE : A Retargetable, Extensible Very Fast Dynamic Code Generation System » de D. R. Engler dans 'Proceedings of the 23th Annual ACM Conference on Programming Language Design and Implementation', Mai 1996, Philadelphia, PA. Ces générateurs de code transforment le code symbolique SYM en code exécutable, ce code exécutable BIN est directement binaire et est celui qui est stocké.

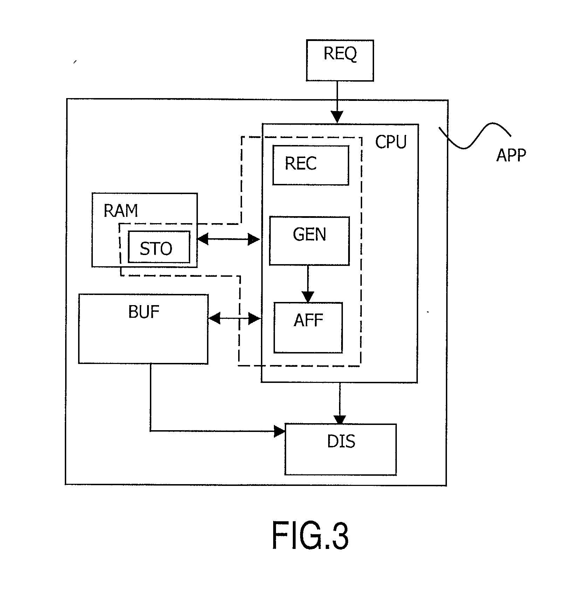

La figure 3 est un diagramme schématique d'un appareil électronique APP nécessitant un affichage d'au moins un caractère sur un appareil de sortie DIS. Cet appareil électronique APP comprend un processeur CPU, une mémoire RAM incluant un module de stockage STO selon l'invention, une mémoire graphique BUF dédiée à l'affichage graphique et un appareil de sortie DIS. Cet appareil électronique APP est en outre équipé d'un système de réception REC d'une requête REQ d'affichage. Cette requête d'affichage est par exemple générée par une entrée clavier ou par la réception de données transportées par un réseau ou par des ondes. Représentée comme étant externe à l'appareil APP, la requête peut aussi être générée de manière interne. L'appareil électronique est, en outre, en liaison avec une base de données incluant des descriptions sommaires de caractères. Cette base de données non représentée ici peut être incluse localement dans l'appareil électronique APP ou peut être reçue par cet appareil électronique APP, par exemple, en même temps que la requête d'affichage REQ (page web...). Un dispositif DEV d'affichage selon l'invention est inclus dans l'appareil électronique APP selon l'invention, ce système d'affichage DEV est, sur la figure 3, entouré de pointillés ; il comprend en particulier un module d'exécution EXE et un module d'élaboration GEN de code exécutable constitué selon le principe de l'étape d'élaboration exposée sur la figure 1 par des moyens d'extraction, à partir de la description sommaire dudit caractère, d'un code symbolique non exécutable définissant des actions pour colorier des points sur l'appareil de sortie et des moyens de génération dynamique, à partir dudit code symbolique, du code exécutable. L'appareil électronique APP, schématiquement représenté sur la figure 3, peut, en pratique, être un téléphone portable GSM pouvant accéder à Internet, un ordinateur recevant des pages Web avec des polices définies dans les pages, ainsi que tout autre appareil électronique comprenant une unité d'affichage et un microprocesseur devant afficher du texte en utilisant des polices dont le chargement est dynamique et pour lesquels l'affichage graphique n'est pas la fonction première et pour lesquels l'utilisation de matériel graphique sophistiqué n'est pas justifiée.

Bien que cette invention ait été décrite en accord avec les modes de réalisation présentés, un homme du métier reconnaîtra immédiatement qu'il existe des variantes aux modes de réalisation présentés et que ces variantes sont dans l'esprit de la présente invention. Ainsi, des modifications peuvent être réalisées par un homme du métier sans pour autant s'exclure de la portée de l'invention définie par les revendications suivantes.

## Revendications

1. Procédé destiné à contrôler l'affichage d'au moins un caractère sur un appareil de sortie, une description sommaire dudit caractère étant incluse dans une base de données, ledit procédé comprenant les étapes suivantes :
- élaboration d'un code exécutable à partir de la description sommaire dudit caractère,
- exécution du code exécutable correspondant audit caractère afin d'afficher le caractère sur l'appareil de sortie,
**caractérisé en ce que** l'étape d'élaboration du code exécutable comprend deux sous-étapes :
- une étape d'extraction, à partir de la description sommaire dudit caractère, d'un code symbolique non exécutable définissant des actions pour colorier des points sur l'appareil de sortie,
- une étape de génération dynamique, à partir dudit code symbolique, du code exécutable.

2. Procédé selon la revendication 1, **caractérisé en ce que** le code exécutable élaboré est stocké dans un module de stockage.

3. Procédé selon la revendication 2, **caractérisé en ce qu'**il comprend les étapes suivantes :
- réception d'une requête d'affichage dudit caractère,
- recherche d'un code exécutable correspondant audit caractère dans le module de stockage,
- décision, selon le résultat de la recherche, de :
- lorsque le code exécutable correspondant audit caractère est absent dans le module de stockage, élaborer ce code à partir de la description sommaire dudit caractère, le stocker dans le module de stockage et l'exécuter afin d'afficher ledit caractère sur l'appareil de sortie,
- lorsque le code exécutable correspondant audit caractère est présent dans le module de stockage, l'exécuter afin d'afficher ledit caractère sur l'appareil de sortie.

4. Dispositif destiné à contrôler l'affichage d'au moins un caractère sur un appareil de sortie, une description sommaire dudit caractère étant incluse dans une base de données accessible au dispositif, incluant :
- un module d'élaboration lié à la base de données et destiné à élaborer un code exécutable à partir de la description sommaire dudit caractère,
- un module d'exécution, couplé à l'appareil de stockage et à l'appareil de sortie, ledit module d'exécution étant destiné à exécuter le code exécutable correspondant audit caractère afin d'afficher ledit caractère sur l'appareil de sortie,
**caractérisé en ce que** le module d'élaboration inclut :
- des moyens d'extraction, à partir de la description sommaire dudit caractère, d'un code symbolique non exécutable définissant des actions pour colorier des points sur l'appareil de sortie,
- des moyens de génération dynamique, à partir dudit code symbolique, du code exécutable.

5. Dispositif selon la revendication 4, **caractérisé en ce qu'**il comprend un module de stockage couplé au module d'élaboration et destiné à stocker le code exécutable élaboré.

6. Dispositif selon la revendication 5, **caractérisé en ce qu'**il comprend :
- des moyens de réception d'une requête d'affichage dudit caractère,
- des moyens de recherche d'un code exécutable correspondant audit caractère dans le module de stockage,
- des moyens de décision, selon le résultat de la recherche du code exécutable correspondant audit caractère, de :
- lorsque le code exécutable correspondant audit caractère est absent dans le module de stockage, élaborer ce code à partir de la description sommaire dudit caractère, le stocker dans le module de stockage et l'exécuter afin d'afficher ledit caractère sur l'appareil de sortie,
- lorsque le code exécutable correspondant audit caractère est présent dans le module de stockage, l'exécuter afin d'afficher ledit caractère sur l'appareil de sortie.

7. Appareil électronique comprenant au moins :
- des moyens d'accès à une base de données contenant des descriptions sommaires de caractères,
- un dispositif destiné à contrôler l'affichage d'au moins un caractère sur un appareil de sortie selon l'une des revendications 4 à 6, ladite base de données étant accessible audit dispositif,
- un appareil de sortie destiné à afficher au moins un caractère et contrôlé par le dispositif de contrôle.

8. Produit programme d'ordinateur pour contrôler l'affichage d'au moins un caractère sur un appareil de sortie destiné à afficher, une description sommaire dudit caractère étant incluse dans une base de données accessible à l'ordinateur, comprenant au moins les instructions nécessaires à la réalisation des étapes des procédés décrits dans l'une des revendications 1 à 3.
